# EUROPÄISCHE PATENTSCHRIFT

(11) **EP 2 333 519 B1**
(45) Veröffentlichungstag und Bekanntmachung des Hinweises auf die Patenterteilung: **29.06.2016**
(21) Anmeldenummer: 10075722.8
(22) Anmeldetag: 27.10.2010
(51) Int. Cl.: G01N 17/04, G01N 17/00, G01N 3/56

(54) **Vorrichtung zur Durchführung von Korrosionstests an Stahlwerkstoffen**
Device for carrying out corrosion tests on steel materials
Dispositif d'exécution de tests de corrosion sur des matériaux à base d'acier

(30) Priorität: 26.11.2009 DE 102009056051
(43) Veröffentlichungstag der Anmeldung: 15.06.2011
(73) Patentinhaber: Salzgitter Mannesmann Forschung GmbH, 47259 Duisburg (DE)
(72) Erfinder: Kulgemeyer, Axel, 47829 Krefeld (DE); Bosch, Christoph, 44357 Dortmund (DE); Wanzenberg, Elke, 40882 Ratingen (DE)
(74) Vertreter: Meissner, Peter E.

(56) Entgegenhaltungen:
- FR-A1- 2 346 709
- FR-A1- 2 366 558
- BOSCH C ET AL: "Improved understanding of test variables in the nace tensile test", INTERNATIONAL CORROSION CONFERENCE SERIES, NATIONAL ASSOCIATION OF CORROSION ENGINEERS, US, 22. März 2009 (2009-03-22), Seiten PAPER-09096/1, XP009144830, ISSN: 0361-4409
- MARCHEBOIS H ET AL: "Nace TM0177 method a uniaxial tensile testing: Learnings from investigations on test procedure", INTERNATIONAL CORROSION CONFERENCE SERIES, NATIONAL ASSOCIATION OF CORROSION ENGINEERS, US, 22. März 2009 (2009-03-22), Seiten PAPER-09094/1, XP009142662, ISSN: 0361-4409

## Beschreibung

Die Erfindung betrifft eine Vorrichtung zur Durchführung von Korrosionstests an Stahlwerkstoffen.

Wenngleich sich die Erfindung insbesondere auf eine Vorrichtung zur Durchführung eines Korrosionstests zur Prüfung auf Sulfidspannungsrisskorrosion (SSC) bezieht, wie er z. B. aus dem NACE Standard TM0177-2005 bekannt ist, ist diese Vorrichtung aber im Grundsatz auch auf jeden anderen Test zur Korrosions- oder Werkstoffprüfung anwendbar.
Ober diese Testmethode wurde auch berichtet in ":BOSCH et al.:Improved understanding of test variables in the nace tensile test, International Corrosion Conference Series, National Ass.of Corrosion Engineers, US, 22.März 2009, Seiten Paper-09096/11,XP009144830,ISSN: 0361-4409".

Die Sulfidspannungsrisskorrosion an Stahlwerkstoffen stellt ein ernstes Problem insbesondere für Ölfeldrohre dar, die zur Förderung von Schwefelwasserstoff enthaltendem Öl oder Gas ausgelegt werden sollen.

Bei diesem in der Fachwelt allgemein anerkannten Testverfahren wird die Prüfung auf Sulfidspannungsrisskorrosion nach der Spezifikation des NACE Standards mit einer Prüflösung bestehend aus einer mit H₂S gesättigten Lösung aus NaCl und CH₃COOH durchgeführt.

Die Prüfanforderungen für den in die Prüflösung eingetauchten und unter Zugspannung stehenden Prüfling sehen vor, dass innerhalb der Testdauer von 720 Stunden der Prüfling nicht brechen soll.

Die Prüfung selbst wird mit Prüfvorrichtungen wie im NACE Standard TM0177-2005 vorgeschlagen durchgeführt, bei der z. B. eine mittels eines Spannelementes in einem Prüfring eingespannte Probe in einer Prüflösung durch eine definierte Prüflast beaufschlagt wird.

Hierzu ist die Probe an beiden Enden mit einem Gewinde versehen, um sie an einem Ende in eine am Innenumfang des Ringes befestigte Gewindemutter einschrauben bzw. fixieren zu können.

Zum Spannen der Probe wird das Spannelement durch eine Bohrung im Ring bis zu einem als Auflager auf der Ringoberfläche dienenden Anschlag hindurchgeführt und das andere Ende der Probe mit einer am Spannelement befestigten Gewindemutter verbunden.

Beim Spannen des Spannelementes wird über einen Spannkopf durch Drehbewegung auf die Probe eine Zugkraft aufgebracht und dabei der Prüfring elastisch verformt. Die Prüflast wird gemäß NACE Standard indirekt über die gemessene elastische Ringverformung ermittelt, wobei die Abweichung vom Durchmesser im ungespannten Zustand beispielsweise mittels Mikrometerschrauben gemessen und in eine Zugkraft umgerechnet wird.

Gravierender Nachteil dieser Vorrichtung ist die Ungenauigkeit der ermittelten Prüfergebnisse, da sich Ungenauigkeiten bei der Messung der Ringverformung direkt auf die Prüflastermittlung auswirken und zusätzlich Temperaturschwankungen oder Inhomogenitäten im Werkstoff des Prüfrings zu ungenauen Prüflastermittlungen führen.

Aufgabe der Erfindung ist es, eine Vorrichtung zur Durchführung von Korrosionstests an Stahlwerkstoffen, beispielsweise zur Prüfung auf Sulfidspannungsrisskorrosion, anzugeben, welche eine genauere Ermittlung der Prüflast und damit genauere Prüfergebnisse ermöglicht.

Erfindungsgemäß wird diese Aufgabe mit den Merkmalen des Anspruchs gelöst.

Der große Vorteil der erfindungsgemäßen Vorrichtung besteht darin, dass durch die direkte Kraftmessung an der Probe während der Verformung des Ringes eine exakte Bestimmung der auf die Probe einwirkenden Prüflast möglich ist und bedingt dadurch viel genauere Prüfergebnisse mir einer sehr viel höheren Aussagekraft erreicht werden.

Zudem ist die Installation der Kraftmesseinrichtung sehr einfach und kostengünstig realisierbar, da nur ein handelsüblicher Kraftmesser, wie beispielsweise ein Piezo-Kristall, in Fließrichtung der Kraft des Spannelementes installiert werden muss. Günstig ist es dabei den Kraftmesser direkt oberhalb des Auflagers anzuordnen.

Der Testaufbau und die Ausführung entsprechen im Grundsatz der im NACE Standard TM0177-2005 vorgesehenen Prüfvorrichtung lediglich erweitert um die Kraftmesseinrichtung, so dass die Konformität mit dem NACE Standard gewährleistet ist.

Anhand einer schematischen Darstellung eines Ausführungsbeispiels wird die erfindungsgemäße Vorrichtung näher erläutert.

Die Vorrichtung besteht aus einem Prüfring 1 der für die Prüfung nach dem NACE Test Standard TM0177-2005 in diesem Beispiel folgende Abmessungen aufweist: 300 mm Durchmesser, 50 mm Breite, 12-15 mm Wanddicke.

Der Prüfring 1 ist an der Innen- und Außenoberfläche abgedreht, so dass er eine möglichst gleichmäßige Wanddicke über den gesamten Umfang hat. Am Außenumfang des Ringes 1 ist gegenüber liegend jeweils eine Auflageplatte 2, 2' angeschweißt, die planparallel geschliffen ist, um eine exakte Auflagefläche für einen sicheren Stand des Prüfrings 1 und für die Prüfkraftaufbringung auf die Probe 3 zu erhalten.

Die Probe 3 selbst ist an beiden Enden mit einem hier nicht dargestellten Gewinde versehen, um sie an einem Ende an der Ringinnenseite im Bereich der Auflageplatte 2' mit einer dort befestigten Gewindemutter 4' und am anderen Ende mit der Gewindemutter 4 eines Spannelementes 5 verbinden zu können. Für ein leichteres Verbinden der Probe 3 mit dem Spannelement 5 ist die Gewindemutter 4 als Überwurfmutter ausgebildet.

Zur Aufbringung der Zugkraft ist in die obere Auflageplatte 2 und in den Prüfring 1 eine durchgehende Bohrung eingebracht, durch die das stabförmige Spannelement 5 mit einem Ende mit Spiel hindurchgeführt und mit der Probe 3 über die Gewindemutter 4 verbunden wird. Das andere Ende des Spannelementes 5 ragt mit einer solchen Länge aus der Bohrung hervor, dass weitere mit Bohrungen versehene Bauelemente hierauf aufgesteckt werden können, die sich insgesamt auf der Auflageplatte 2 abstützen.

Das aus dem Ring 1 herausragende Ende des Spannelementes 5 ist mit einem Gewinde versehen, auf das ein als Sechskant ausgebildeter und mit einer Durchgangsbohrung versehener Spannkopf 8 aufgeschraubt ist.

Um Reibungen und Versetzungen beim Spannen des Prüfringes so gering wie möglich zu halten, ist auf der Auflageplatte 2 zunächst ein Auflager für das Spannelement 5 angeordnet, das erfindungsgemäß als Kalottenlager 6 ausgebildet ist.

Erfindungsgemäß befindet sich in Flussrichtung der aufgebrachten Zugkraft des Spannelementes 5 zwischen Kalottenlager 6 und einem Kugellager 7 eine Kraftmesseinrichtung 9 vorteilhaft bestehend aus einer Piezo-Kraftmessdose und einem hier nicht dargestellten Messverstärker, um direkt während des Spannens die auf die Probe 3 aufgebrachte Prüfkraft messen zu können.

Zwischen Spannkopf 8 und Kugellager 7 ist ein weiteres Kalottenlager 6' angeordnet, um Reibungen und Versetzungen weiter zu minimieren.

Durch einfache Drehbewegung des Spannkopfes 8 z. B. mittels eines Schraubenschlüssels relativ zum Spannelement 5 kann so über das Auflager auf der Auflageplatte 2 die Probe 3 mit einer Prüflast beaufschlagt werden.

Um ein Mitdrehen der Kraftmesseinrichtung 9 bei einer Drehbewegung des Spannkopfes 8 zu verhindern, ist der Spannkopf 8 mittelbar über das zweite Kalottenlager 6' und das Kugellager 7 auf der Kraftmesseinrichtung 9 aufgelagert.

**Bezugszeichenliste**

| **Nr.** | **Bezeichnung** |
|---|---|
| 1 | Prüfring |
| 2, 2' | Auflageplatte |
| 3 | Probe |
| 4, 4' | Gewindemutter |
| 5 | Spannelement |
| 6, 6' | Kalottenlager |
| 7 | Kugellager |
| 8 | Spannkopf |
| 9 | Kraftmesseinrichtung |

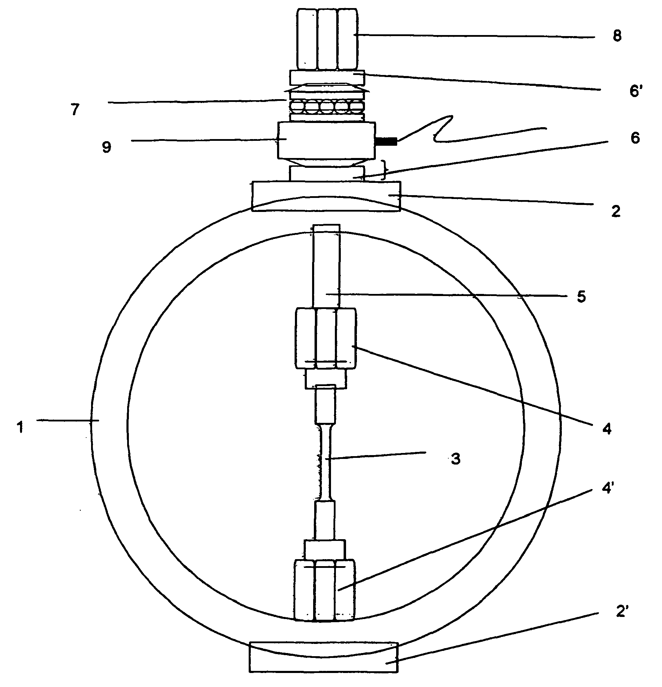

## Patentansprüche

1. Vorrichtung zur Durchführung von Korrosionstests an Stahlwerkstoffen, beispielweise zur Prüfung auf Sulfidspannungsrisskorrosion nach dem NACE Standard TM-0177-2005, bestehend aus einem Prüfring (1) in den eine in einer Prüflösung eingetauchte Probe (3) über ein Spannelement (5) mit einer Zugkraft beaufschlagt werden kann und die Probe (3) an einem Ende am Prüfring (1) und am anderen Ende mit dem Spannelement (5) verbindbar ist, wobei:
- der Prüfring (1) im Bereich einer Einspannstelle der Probe (3) am Außenumfang mit einer oberen und einer unteren Auflageplatte (2, 2') versehen ist, wobei die Auflageplatten (2, 2') planparallel geschliffen sind;
- das Spannelement (5) zur Krafteinleitung in die Probe mit einem Spannkopf (8) und einem auf der oberen Auflageplatte (2) angeordneten Kalottenlager (6) versehen ist;
- in Flussrichtung der aufgebrachten Zugkraft des Spannelements (5) eine die einwirkende Kraft direkt messende Kraftmesseinrichtur:g (9) zwischen dem Kalottenlager (6) und einem Kugellager (7) angeordnet ist; und
- zwischen dem Kugellager (7) und dem Spannkopf (8) ein weiteres Kalottenlager (6') angeordnet ist.

2. Vorrichtung nach Anspruch 1,
**dadurch gekennzeichnet,**
**dass** die Kraftmesseinrichtung (9) eine Piezo-Kraftmessdose ist.

## Claims

1. Device for carrying out corrosion tests on steel materials, for example for testing for sulphide stress corrosion cracking according to the NACE Standard TM-0177-2005, consisting of a testing ring (1) in which a specimen (3) immersed in a testing solution can be subjected to a tensile force via a tensioning element (5) and the specimen (3) can be connected at one end to the testing ring (1) and at the other end to the tensioning element (5); wherein
- the testing ring (1) is provided, in the region of a fixing location of the specimen (3), with an upper and a lower supporting plate (2, 2') at the outer circumference, the supporting plates (2, 2') being ground plane-parallel;
- the tensioning element (5) is provided, for introducing force into the specimen, with a tensioning head (8) and a spherical bearing (6) arranged on the upper supporting plate (2);
- in the flow direction of the applied tensile force of the tensioning element (5), there is arranged between the spherical bearing (6) and a ball bearing (7) a force measuring device (9) which directly measures the acting force; and
- a further spherical bearing (6') is arranged between the ball bearing (7) and the tensioning head (8).

2. Device according to Claim 1,
**characterised**
**in that** the force measuring device (9) is a piezoelectric load cell.

## Revendications

1. Dispositif pour l'exécution de tests de corrosion sur des matériaux à base d'acier, par exemple pour le contrôle de fissuration par corrosion sous contraintes au sulfure selon la norme NACE TM-0177-2005, comprenant une bague d'épreuve (1) dans laquelle un échantillon (3) plongé dans une solution d'épreuve peut être sollicité avec une force de traction via un élément de serrage (5), et l'échantillon (3) est susceptible d'être relié à une extrémité à la bague d'épreuve (1) et à l'autre extrémité avec l'élément de serrage (5), dans lequel :
- la bague d'épreuve (1) est dotée, dans la région d'un emplacement de serrage de l'échantillon (3) à la périphérie extérieure, d'une plaque d'appui supérieure et d'une plaque d'appui inférieure (2, 2'), dans lequel les plaques d'appui (2, 2') sont rectifiées de manière à présenter des plans parallèles ;
- l'élément de serrage (5) est doté, pour l'application d'une force dans l'échantillon, d'une tête de serrage (8) et d'un palier-calotte (6) agencé sur la plaque d'appui supérieure (2) ;
- un dispositif de mesure de force (9), qui mesure directement la force appliquée, est agencé dans la direction du flux de la force de traction appliquée par l'élément de serrage (5), entre le palier-calotte (6) et un palier à billes (7) ; et
- un autre palier-calotte (6') est agencé entre le palier à billes (7) et la tête de serrage (8).

2. Dispositif selon la revendication 1,
**caractérisé en ce que** le dispositif de mesure de force est un dynamomètre piézoélectrique.
